(19) Europäisches Patentamt
European Patent Office
Office européen des brevets

(11) Veröffentlichungsnummer : **0 231 147 B1**

# (12) EUROPÄISCHE PATENTSCHRIFT

(45) Veröffentlichungstag der Patentschrift : **15.01.92 Patentblatt 92/03**

(51) Int. Cl.[5] : **D06P 3/32,** D06P 3/30, C09B 45/16, // D06P1/10

(21) Anmeldenummer : **87810026.2**

(22) Anmeldetag : **15.01.87**

## (54) Verfahren zum Trichromiefärben von Leder.

(30) Priorität : **21.01.86 CH 221/86**

(43) Veröffentlichungstag der Anmeldung : **05.08.87 Patentblatt 87/32**

(45) Bekanntmachung des Hinweises auf die Patenterteilung : **15.01.92 Patentblatt 92/03**

(84) Benannte Vertragsstaaten : **CH DE ES FR GB IT LI**

(56) Entgegenhaltungen :
**EP-A- 0 061 670**
**DE-A- 3 514 387**
**CHEMICAL ABSTRACTS, Band 86, 1977, Seite 47, Nr. 90848k, Columbus, Ohio, US**

(73) Patentinhaber : **CIBA-GEIGY AG**
**Klybeckstrasse 141**
**CH-4002 Basel (CH)**

(72) Erfinder : **Beffa, Fabio, Dr.**
**Burgstrasse 38**
**CH-4125 Riehen (CH)**
Erfinder : **Koller, Josef**
**Römerstrasse 22**
**CH-4153 Reinach (CH)**

**EP 0 231 147 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Aus der EP-A-61 670 ist ein Verfahren zum Trichromiefärben von Leder bekannt. Als Farbstoffe werden in diesem Verfahren vor allem 1:2-Chrom- oder 1:2-Kobaltkomplexe von Azo- oder Azomethinfarbstoffen eingesetzt.

Es wurde nun gefunden, dass sich 1:2-Chromkomplexe von Azofarbstoffen der unten aufgeführten Formel II besonders gut als blaue bzw. graue Farbstoffe für das Trichromiefärben von Leder eignen. Ueberraschenderweise erhält man mit Trichromie-Mischungen, welche diese Farbstoffe enthalten, unabhängig von der Lederart egale Färbungen, welche sich durch eine besonders gute Lichtechtheit auszeichnen.

Gegenstand der vorliegenden Erfindung ist ein Verfahren zum Färben von Leder mit einer Mischung aus einem gelben, einem roten und einem blauen Farbstoff, wobei der gelbe und der rote Farbstoff der Formel

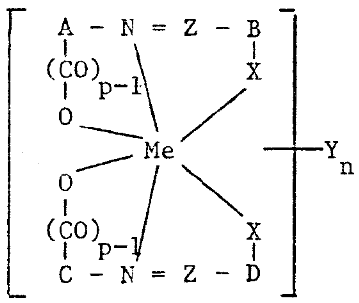

(I)

entsprechen, worin

Z unabhängig voneinander Stickstoff oder eine CH-Gruppe,

A und C unabhängig voneinander je einen Rest der Benzol- oder Naphthalinreihe, welcher in o-Stellung zur Azo- oder Azomethingruppe eine Hydroxy- oder Carboxygruppe enthält,

B und D unabhängig voneinander je den Rest einer Kupplungskomponente, wenn Z Stickstoff ist, wobei die Kupplungskomponente in o-bzw. α-Stellung zur Azogruppe die Gruppe X enthält, oder unabhängig voneinander den Rest eines o-Hydroxyaldehyds, wenn Z die CH-Gruppe darstellt,

X unabhängig voneinander je Sauerstoff oder eine Gruppe der Formel -NR-, worin R Wasserstoff oder eine $C_1$-$C_4$-Alkylgruppe darstellt,

Me Chrom oder Kobalt,

Y die $SO_3H$-, COOH- oder $PO_3H_2$-Gruppe,

p 1 oder 2 und

n eine ganze Zahl von 1 bis 6 bedeutet,

dadurch gekennzeichnet, dass man eine wässrige Färbeflotte verwendet, welche einen grauen Farbstoff enthält, der der Formel

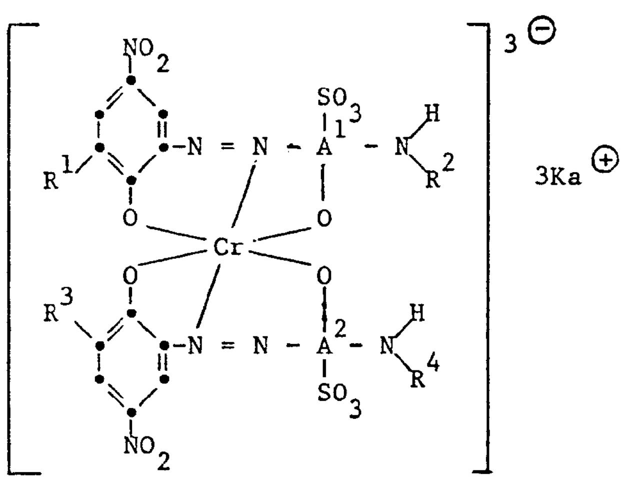

(II)

entspricht, worin

$R^1$ und $R^3$ unabhängig voneinander je Wasserstoff oder Sulfo,

$A^1$ und $A^2$ unabhängig voneinander je den Rest von 1-Hydroxynaphthalin oder 2-Hydroxynaphthalin,

$R^2$ und $R^4$ unabhängig voneinander je Wasserstoff oder eine Gruppe der Formel $-CO-(O)_m-E$, wobei E $C_1$-$C_5$-Alkyl und m 0 oder 1 ist, und

$Ka^{\oplus}$ ein Kation bedeutet.

Unter gelben Farbstoffen sind alle Farbstoffe mit gelber Nuance zu verstehen, z.B. gelbbraune oder auch rotstichig oder grünstichig gelbe Farbstoffe. Die orangefarbenen bis rotbraunen Farbstoffe werden insgesamt als rote Farbstoffe bezeichnet und die blauen, grauen oder violetten Farbstoffe als blaue Farbstoffe.

$Ka^{\oplus}$ stellt ein Kation, beispielsweise ein Alkalikation, wie Lithium, Kalium, oder vorzugsweise Natrium dar. Ferner kann $Ka^{\oplus}$ ein Ammoniumkation oder das Ammoniumsalz eines organischen Amins sein.

Die Reste $A^1$ und $A^2$ leiten sich vorzugsweise von 1-Hydroxy-3-sulfonaphthalin oder von 2-Hydroxy-4-sulfonaphthalin ab und die Reste $-NHR^2$ und $-NHR^4$ befinden sich bevorzugt in 6- oder 7-Stellung dieser Verbindungen.

$R^2$ und $R^4$ können voneinander verschieden sein, sind jedoch vorzugsweise gleich. Geeignete Gruppen $R^2$ bzw. $R^4$ sind beispielsweise: Wasserstoff, Acetyl, Propionyl, Butyryl, Isobutyryl, Valeryl, Isovaleryl, Pivaloyl, Capronyl, Methoxycarbonyl, Aethoxycarbonyl, Propoxycarbonyl oder n-Pentoxycarbonyl. Vorzugsweise bedeuten $R^2$ und $R^4$ Wasserstoff, Acetyl, Propionyl, Methoxycarbonyl oder Aethoxycarbonyl und insbesondere Wasserstoff oder Acetyl.

Besonders bevorzugte Reste $A^1$ und $A^2$ leiten sich ab von 1-Hydroxy-7-aminonaphthalin-3-sulfonsäure, 1-Hydroxy-6-aminonaphthalin-3-sulfonsäure, 2-Hydroxy-6-aminonaphthalin-4-sulfonsäure oder von den entsprechenden Acetylaminoverbindungen.

Die besonders bevorzugten grauen Farbstoffe sind der 1:2-Chromkomplex des Farbstoff der Formel

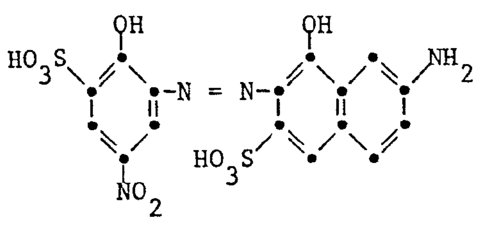

(III)

sowie vor allem der 1:2-Chromkomplex des Farbstoffs der Formel

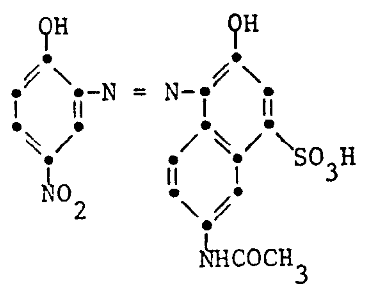

(IV) .

Die Farbstoffe der Formeln II, III oder IV werden zusammen mit einem gelben und einem roten Farbstoff der Formel I eingesetzt.

Die Farbstoffe der Formeln I bis IV sind anionischer Natur und werden vorteilhaft in Form ihrer Salze, insbesondere Alkalisalze, wie z.B. Lithium-, Kalium- oder Natriumsalze, oder als Ammoniumsalze eingesetzt. Unter Ammoniumsalzen sind auch Salze organischer Amine zu verstehen, z.B. solcher, die mit $C_1$-$C_6$-Alkyl oder Hydroxy-$C_1$-$C_6$-alkylgruppen substituiert sind.

Als Farbstoffe der Formel I kommen sowohl symmetrische als auch asymmetrische 1:2-Azo- oder 1:2-Azomethinkomplexe in Frage sowie 1:2-Komplexe, welche einen Azo- und einen Azomethinfarbstoff an das Metall gebunden enthalten.

Von den Farbstoffen der Formel I werden vorzugsweise diejenigen verwendet, bei denen X Sauerstoff bedeutet.

Falls die Farbstoffe der Formel I mehrere Gruppen Y aufweisen, so können diese gleich oder verschieden sein, d.h. die Farbstoffe können Sulfonsäuregruppen und/oder Carbonsäuregruppen und/oder Phosphonsäuregruppen enthalten. Vorzugsweise stellen jedoch alle Y $SO_3H$-Gruppen dar.

Ferner werden vorzugsweise solche Farbstoffe der Formel I verwendet, bei denen p gleich 1 ist, sowie solche, bei denen n 1 bis 3, vorzugsweise 2, bedeutet.

Die Reste A und C können eine oder mehrere Carbon-, Phosphon- oder Sulfonsäuregruppen tragen und ausserdem weitersubstituiert sein, insbesondere mit $C_1$-$C_4$-Alkyl oder -Alkoxy, Chlor, oder Nitro.

Geeignete Diazokomponenten A und C sind z.B.: Anthranilsäure, 4- oder 5-Sulfoanthranilsäure, 2-Amino-1-hydroxybenzol, 4-Chlor- und 4,6-Dichlor-2-amino-1-hydroxybenzol, 4- oder 5-Nitro-2-amino-1-hydroxybenzol, 4-Chlor-und 4-Methyl-6-nitro-2-amino-1-hydroxybenzol, 6-Chlor-4-nitro-2-amino-1-hydroxybenzol, 4-Cyan-2-amino-1-hydroxybenzol, 4-Methoxy-2-amino-1-hydroxybenzol, 4-Methoxy-5-chlor-2-amino-1-hydroxybenzol, 4-Methyl-2-amino-1-hydroxybenzol, 4-Chlor-5-nitro-2-amino-1-hydroxybenzol, 3,4,6-Trichlor-2-amino-1-hydroxybenzol, 4,6-Dinitro-2-amino-1-hydroxybenzol, 2-Amino-1-hydroxybenzol-4- oder -5-sulfosäure, 4-Nitro-2-amino-1-hydroxybenzol-6-sulfosäure, 5-Nitro- oder 6-Nitro-2-amino-1-hydroxybenzol-4-sulfosäure, 6-Chlor-2-amino-1-hydroxybenzol-4-sulfosäure, 4-Chlor-2-amino-1-hydroxybenzol-6-sulfosäure, 1-Amino-2-hydroxy-naphthalin-4-sulfosäure, 1-Amino-2-hydroxy-6-nitronaphthalin-4-sulfosäure, oder 2-Amino-1-hydroxybenzol-4,6-disulfosäure, 1-Amino-2-hydroxybenzol-4-sulfonsäureamid oder 4-Methylsulfonyl-2-amino-1-hydroxybenzol.

Vorzugsweise stellen A und C unabhängig voneinander jeweils den Rest eines 1-Hydroxy-2-aminobenzols dar, welcher gegebenenfalls ein- oder mehrmals durch gleiche oder verschiedene Substituenten aus der Reihe Nitro, Sulfo, Chlor, Methyl oder Methoxy substituiert ist, und insbesondere den Rest eines 1-Hydroxy-2-aminobenzols, der in 4- oder 5-Stellung eine Nitrogruppe trägt oder den Rest eines 1-Hydroxy-2-aminobenzols, der in 4-Stellung eine Nitrogruppe und in 6-Stellung eine Sulfogruppe trägt, oder den Rest eines 1-Hydroxy-2-aminobenzols, der in 4-Stellung eine Sulfogruppe und in 6-Stellung eine Nitrogruppe trägt.

Die Reste B bzw. D leiten sich vorzugsweise von folgenden Gruppen von Kupplungskomponenten ab: gegebenenfalls durch niedermolekulares Alkyl oder Alkoxy, Amino oder Acylamino substituierte in o-Stellung kuppelnde Phenole, wobei Acylamino $C_1$-$C_4$-Alkanoylamino-, $C_1$-$C_4$-Alkylsulfonylamino-, $C_1$-$C_4$-Alkoxycarbonylamino-, Aroylamino- oder Arylsulfonylaminoreste bedeutet,

Resorcin, m-Phenylendiamin, gegebenenfalls in 4-Stellung substituiert durch Sulfo, Chlor, Methyl oder Methoxy, Naphthole, die gegebenenfalls mit $C_1$-$C_4$-Alkyl oder Alkoxy, Chlor, Amino, Acylamino oder Sulfo substituiert sind, wobei Acylamino dieselbe Bedeutung hat, die vorne angegeben ist,

5-Pyrazolone oder 5-Aminopyrazole, die in 1-Stellung einen gegebenenfalls mit Chlor, Nitro, $C_1$-$C_4$-Alkyl- oder Alkoxygruppen oder Sulfogruppen substituierten Phenyl- oder Naphthylrest besitzen und in 3-Stellung eine $C_1$-$C_4$-Alkylgruppe, insbesondere eine Methylgruppe aufweisen.

Acetessigsäureamide, Acetessigsäureanilide und Benzoylessigsäureanilide, die im Anilidkern gegebenenfalls mit Chlor, $C_1$-$C_4$-Alkyl- oder Alkoxy- oder Sulfogruppen substituiert sein können, oder 6-Hydroxy-3-cyano- oder 6-Hydroxy-3-carbonamido-4-alkyl-2-pyridone, die in 1-Stellung durch gegebenenfalls substituiertes $C_1$-$C_4$-Alkyl, z.B. Methyl, Isopropyl, β-Hydroxyäthyl, β-Aminoäthyl oder γ-Isopropoxypropyl oder durch Phenyl substituiert sind, und in 4-Stellung eine $C_1$-$C_4$-Alkylgruppe, insbesondere Methyl, tragen können.

Beispiele solcher Kupplungskomponenten sind: 2-Naphthol, 1,3- oder 1,5-Dihydroxynaphthalin, 1-Naphthol, 1-Acetylamino-7-naphthol, 1-Propionylamino-7-naphthol, 1-Carbomethoxyamino-7-naphthol, 1-Carboäthoxyamino-7-naphthol, 1-Carbopropoxyamino-7-naphthol, 6-Acetyl-2-naphthol, 2-Naphthol-3-, -4-, -5-, -6-, -7- oder -8-sulfosäure, 1-Naphthol-3-, -4- oder -5-sulfosäure, 1-Naphthol-3,6-disulfosäure, 1-Naphthol-4,8-disulfosäure, 1-Naphthol-3,8-disulfosäure, 2-Naphthol-3,6-disulfosäure, 4-Methyl-1-naphthol, 4-Methoxy-1-naphthol,

4-Acetyl-1-naphthol, 5,8-Dichlor-1-naphthol, 5-Chlor-1-naphthol, 2-Naphthylamin, 2-Naphthylamin-1-sulfosäure, 1-Naphthylamin-4- oder -5-sulfosäure, 2-Aminonaphthalin-6- oder -5-sulfosäure, 1-Phenyl-3-methylpyrazol-5-on, 1-Phenyl-5-pyrazolon-3-carbonsäureamid, 1-(2′-, 3′- oder 4′-Methylphenyl)-3-methylpyrazol-5-on, 1-(2′-, 3′- oder 4′-Sulfophenyl)-3-methylpyrazol-5-on, 1-(2′-Chlor-5′-sulfophenyl)-3-methylpyrazol-5-on, 1-(2′- oder 4′-Methoxyphenyl)-3-methylpyrazol-5-on, 1-(2′-, 3′-oder 4′-Chlorphenyl)-3-methylpyrazol-5-on, 1-(2′-, 3′- oder 4′-Nitrophenyl)-3-methylpyrazol-5-on, 1-(2′,5′- oder 3′,4′-Dichlorphenyl)-3-methylpyrazol-5-on, 1-(2′,5′-Dichlor-4′-sulfophenyl)-3-methylpyrazol-5-on, 1-(2′-, 3′- oder 4′-Sulfophenyl)-3-methyl-5-aminopyrazol, 1-(2′-Chlor-5′-sulfophenyl)-3-methyl-5-aminopyrazol, Acetoacetanilid, Acetoacetanilid-2-,-3- oder -4-sulfosäure, Acetoacet-o-anisidid, Acetoacet-o-toluidid, Acetoacet-o-chloranilid, Acetoacet-m-xylidid, Tetralol, 4-Methylphenol, 3-Dialkylaminophenol, besonders 3-Dimethylamino- und 3-Diäthylaminophenol, 4-Butylphenol, 4-Amylphenol, insbesondere 4-t-Amylphenol, 2-Isopropyl-4-methylphenol, 2- oder 3-Acetylamino-4-methylphenol, 2-Methoxycarbonyl-amino-4-methylphenol, 2-Aethoxycarbonylamino-4-methylphenol und 3,4-Dimethylphenol, Resorcin, 1-Aethyl-3-cyano-4-methyl-6-hydroxypyridon,1-Methyl-3-cyano-4-methyl-6-hydroxypyridon, 1-Phenyl-3-carbonamido-4-methyl-6-hydroxypyridon.

Vorzugsweise stellt B bzw. Dein 1- oder 2-Naphthol,gegebenenfalls substituiert mit einer Sulfogruppe, m-Phenylendiamin, Resorcin, p-Alkyl($C_1$-$C_6$)-Phenol, 1-Phenyl-3-methyl-5-pyrazolon oder Acetessigsäureanilid dar, wobei die Phenylgruppe in den beiden letztgenannten Verbindungen durch $C_1$-$C_4$-Alkyl, $C_1$-$C_4$-Alkoxy,

Chlor oder Sulfo substituiert sein kann.

Sofern Z die -CH-Gruppe ist, stellt B bzw. D den Rest eines o-Hydroxyaldehyds dar, vorzugsweise den Rest eines o-Hydroxybenzaldehyds oder o-Hydroxynaphthaldehyds. Geeignete Aldehyde sind beispielsweise: 2-Hydroxy-1-naphthaldehyd, 1-Hydroxy-2-naphthaldehyd, 2-Hydroxy-benzaldehyd, 3- und 5-Methyl-2-hydroxybenzaldehyd, 3,5-Dimethyl-2-hydroxybenzaldehyd, 5-Butyl-2-hydroxybenzaldehyd, 5-Chlor- oder 5-Brom-2-hydroxybenzaldehyd, 3-Chlor-2-hydroxybenzaldehyd, 3,5-Dichlor-2-hydroxybenzaldehyd, 5-Sulfo-2-hydroxybenzaldehyd, 3-Methyl-5-chlor-2-hydroxybenzaldehyd, 5-(Phenylazo)-2-hydroxybenzaldehyd, 5-(2′-,3′-oder 4′-Sulfophenylazo)-2-hydroxybenzaldehyd oder 5-(6′-Sulfonaphthyl-1′-azo)-2-hydroxybenzaldehyd.

Vorzugsweise handelt es sich bei den eingesetzten Farbstoffen der Formel I jeweils um symmetrische 1:2-Metallkomplexe mit 2 Sulfogruppen.

Wegen der leichten Zugänglichkeit und ihrer guten Kombinierbarkeit mit den Farbstoffen der Formel II bis IV werden im erfindungsgemässen Färbe-verfahren insbesondere Mischungen von Farbstoffen verwendet, bei denen der gelbe und der rote Farbstoff der Formel

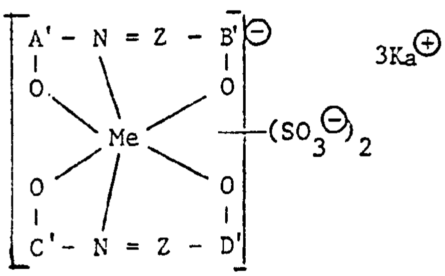

(V)

entsprechen, worin

Z unabhängig voneinander Stickstoff oder eine CH-Gruppe,

A′ und C′ jeweils den Rest eines 1-Hydroxy-2-aminobenzols bedeuten, der in 4- oder 5-Stellung eine Nitrogruppe trägt, oder den Rest eines 1-Hydroxy-2-aminobenzols, der in 4-Stellung eine Nitrogruppe und in 6-Stellung eine Sulfogruppe trägt oder den Rest eines 1-Hydroxy-2-aminobenzols, der in 6-Stellung eine Nitrogruppe trägt und in 4-Stellung eine Sulfogruppe,

B′ und D′ unabhängig voneinander jeweils den Rest einer der folgenden Kupplungskomponenten bedeutet, falls Z Stickstoff ist: 1- oder 2-Naphthol gegebenenfalls substituiert mit einer Sulfogruppe, m-Phenylendiamin, Resorcin, p-Alkyl($C_1$-$C_6$)-Phenol, 1-Phenyl-3-methyl-5-pyrazolon oder Acetessigsäure-anilid, wobei die Phenylgruppe in den beiden letztgenannten Verbindungen durch $C_1$-$C_4$-Alkyl, $C_1$-$C_4$-Alkoxy, Chlor oder Sulfo substituiert sein kann, oder, falls Z die CH-Gruppe ist, den Rest eines o-Hydroxybenzaldehyds oder o-Hydroxynaphthaldehyds,die durch Phenylazo oder Sulfophenylazo substituiert sein können,

Me Kobalt oder Chrom und

$Ka^{\oplus}$ ein Kation bedeutet.

Vorzugsweise verwendet man eine Farbstoffmischung, enthaltend

a) einen grauen 1:2-Chromkomplex der oben angegebenen Formel II,

b) einen roten oder rotbraunen 1:2-Chrom- oder 1:2-Kobaltkomplex des Farbstoffs der Formel

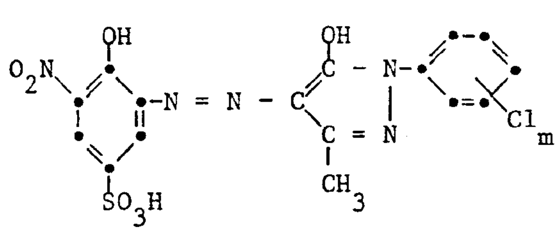

(VI) ,

worin m eine ganze Zahl von 0 bis 2 bedeutet, sowie

c) einen gelben 1:2-Kobaltkomplex des Farbstoffes der Formel

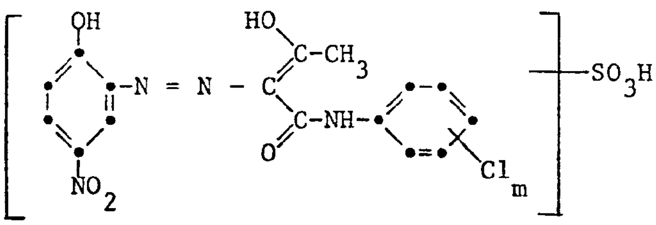

(VII) ,

worin m die oben angegebene Bedeutung hat, oder einen gelbbraunen 1:2-Kobalt- oder 1:2-Chromkomplex des Farbstoffes der Formel

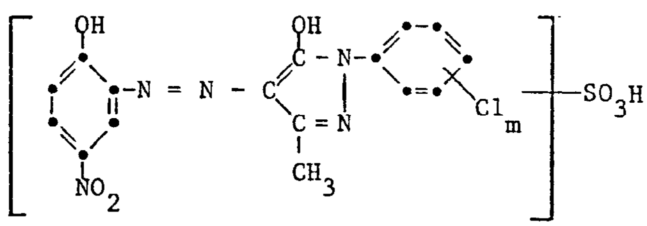

(VIII),

worin m die oben angegebene Bedeutung hat.

Die Mengen, in denen die erfindungsgemäss verwendbaren Farbstoffe in den Färbebädern eingesetzt werden, können je nach der gewünschten Farbtiefe in weiten Grenzen schwanken. Im allgemeinen sind Farbstoffmengen von 0,1 bis 10, vorzugsweise 0,5 bis 4 Gew.%, bezogen auf das Gewicht des zu färbenden Leders, vorteilhaft.

Neben Wasser und den Farbstoffen kann die Färbeflotte noch weitere Zusätze enthalten, z.B. Säuren, Basen oder Salze zur Einstellung des gewünschten pH-Wertes, sowie Hilfsmittel, wie z.B. Netzmittel, Fettungsmittel, farbvertiefende Hilfsmittel und/oder Antischaummittel.

Das erfindungsgemässe Verfahren weist den grossen Vorteil auf, dass es nicht nur für einen bestimmten Ledertyp geeignet, sondern auf die verschiedensten Ledertypen anwendbar ist, beispielsweise auf Chromleder, nachgegerbtem Leder oder Veloursleder von Ziege, Rind, Schaf oder Schwein, sowie auf Pelze. Die erhaltenen Färbungen zeichnen sich durch gute Licht- und Nassechtheiten aus. Da die verwendeten Farbstoffe ähnliche Eindringtiefen in das Leder aufweisen, ist die Schleifechtheit der erhaltenen Färbungen gut, d.h. beim Anschleifen des Leders ist praktisch kein Farbunterschied zwischen der Oberfläche des Leders und inneren Schichten zu erkennen.

Das Färben erfolgt vorzugsweise nach dem Ausziehverfahren, z.B. bei einem Flottenverhältnis von 1:1,5 bis 1:20, vorzugsweise 1:2 bis 1:10, und bei Temperaturen von 20 bis 100°C, vorzugsweise 40 bis 60°C. Falls erwünscht oder erforderlich, kann das Leder einer Vorbehandlung unterworfen werden, beispielsweise einer Neutralisation oder Walke.

Die Färbedauer schwankt je nach Art des Leders und der gewünschten Farbtiefe, liegt im allgemeinen jedoch zwischen 45 und 180 Minuten. Im Anschluss an die Färbung wird das Leder gespült und wie üblich fertiggestellt.

Die folgenden Beispiele veranschaulichen die Erfindung, ohne sie darauf zu beschränken. Temperaturen sind in Grad Celsius angegeben und Prozente bedeuten Gewichtsprozente, bezogen auf das Gewicht des Leders.

Beispiel 1

100 Teile chromgegerbtes Rindleder werden in 300 Teilen Wasser während 10 Minuten bei 30° und 24 Umdrehungen pro Minute gewaschen. Dann wird das Waschwasser abgelassen und durch eine Flotte, bestehend aus 400 Teilen Wasser von 30°, einem Teil Natriumformiat und einem Teil Natriumbikarbonat, ersetzt. Nach einer Neutralisationsdauer von 45 Minuten wird wieder in 300 Teilen Wasser von gleicher Temperatur gewaschen.

Das derart neutralisierte Leder wird anschliessend mit einer Farbstoffmischung aus 0,072 Teilen des gelben Farbstoffes der Formel

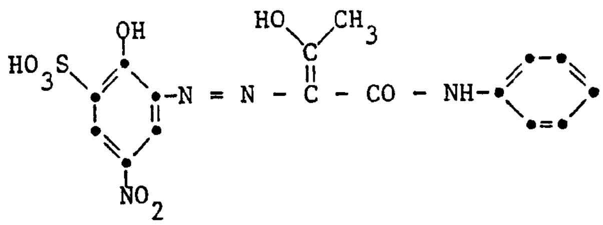

1:2-Kobaltkomplex

0,123 Teilen des roten Farbstoffes der Formel

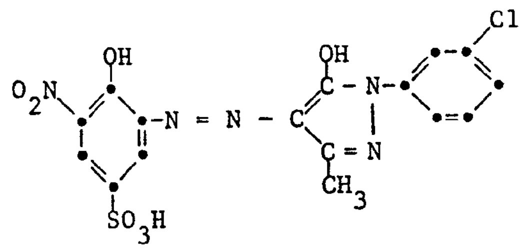

1:2-Chromkomplex

und 0,21 Teilen des grauen Farbstoffes der Formel

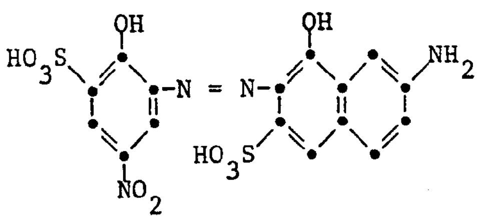

1:2-Chromkomplex

in 300 Teilen Wasser bei 50° gefärbt. Nach 30 Minuten setzt man der Färbeflotte 3 Teile eines Fettungsmittels auf Basis von sulfonierten Chlorparaffinen und nach weiteren 30 Minuten ausserdem noch 0,5 Teile Ameisensäure 85%ig hinzu. Hierauf wird 20 Minuten weiterbehandelt, dann in kaltem Wasser gespült und wie üblich fertiggestellt.

Als Ergebnis erhält man eine egale rotbraune Färbung mit guter Lichtechtheit. Mittels vergrösserter Querschnittaufnahmen kann man feststellen, dass die drei Farbstoffe ein sehr ausgeglichenes Einfärbevermögen besitzen. Beim Anschleifen des Leders ist deshalb kein Farbtonunterschied zwischen Lederoberfläche und dem Lederinneren sichtbar.

Beispiel 2

100 Teile chromgegerbtes, gewaschenes und wie im Beispiel 1 mit Natrium- formiat und Natriumbikarbonat neutralisiertes Rindleder werden in 300 Teilen einer wässrigen, 6 Teile eines synthetischen Gerbstoffes auf Basis von Formaldehyd-Kondensationsprodukten mit phenolischen Sulfonsäuren enthaltenden Flotte 60 Minuten lang bei 30° nachgegerbt. Anschliessend an die Nachgerbung folgt eine 10minütige Wäsche in 300 Teilen Wasser bei 30°.

Das Färben des nachgegerbten Rindleders erfolgt in gleicher Weise wie im Beispiel 1, wobei aber eine Farbstoffmischung bestehend aus 0,228 Teilen des gelben Farbstoffes, 0,072 Teilen des roten Farbstoffes und 0,60 Teilen des grauen Farbstoffes, die im Beispiel 1 eingesetzt wurden, verwendet wird. Nach einer Färbedauer von 30 Minuten bei 50° werden der Färbeflotte ebenfalls 3 Teile Fettungsmittel auf Basis von sulfonierten Chlorparaffinen und nach nochmals 30 Minuten 1 Teil Ameisensäure 85% zugesetzt. Darauf wird noch 20 Minuren lang weiterbehandelt, dann gut in kaltem Wasser gespült und in üblicher Weise fertiggestellt.

Es resultiert eine olivebraune Färbung mit hervorragender Egalität und Lichtechtheit. Sie zeichnet sich

zudem wie jene aus Beispiel 1 durch eine gute Schleifechtheit aus.

Beispiele 3 bis 8

Arbeitet man wie in den Beispiele 1 oder 2 beschrieben, verwendet jedoch anstelle des dort eingesetzten grauen Farbstoffes gleiche Mengen eines der in der folgenden Tabelle verzeichneten grauen Farbstoffe, so erhält man ebenfalls rotbraune bzw. olivebraune Färbungen mit sehr guter Licht- und Schleifechtheit.

| Bsp. | grauer Farbstoff |
|---|---|
| 3 | 1:2-Chromkomplex von 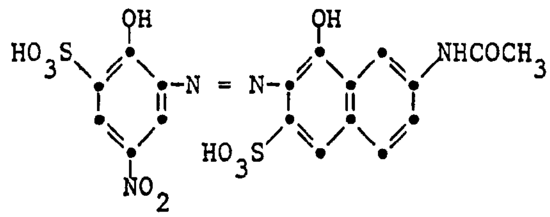 |
| 4 | 1:2-Chromkomplex von 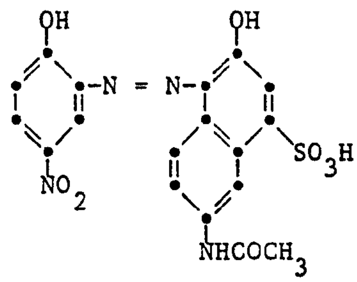 |
| 5 | 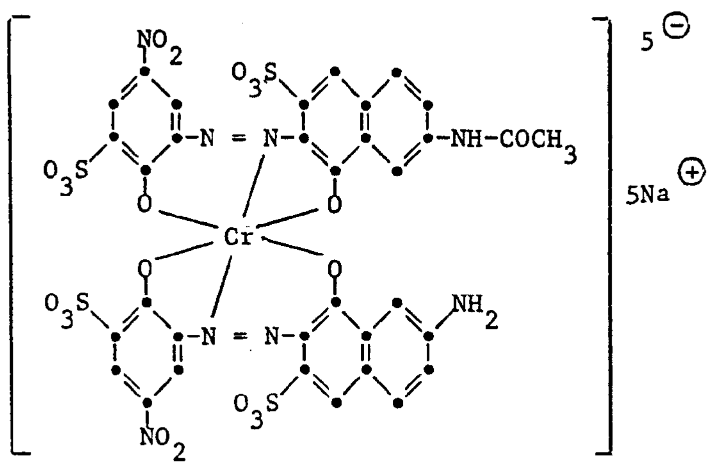 |

| Bsp. | grauer Farbstoffe |
|---|---|
| 6 | 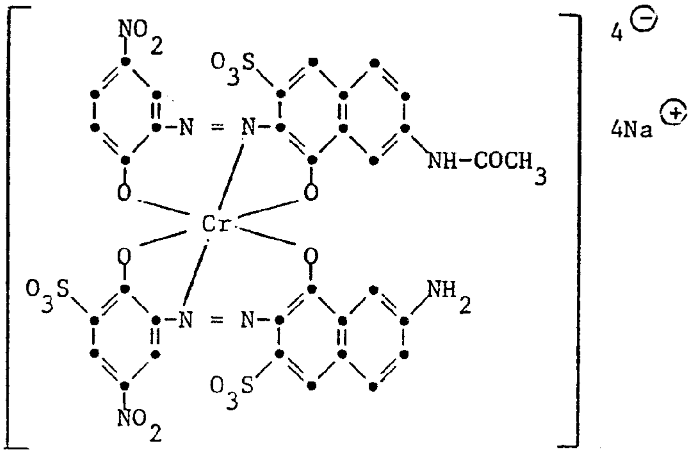 |
| 7 | 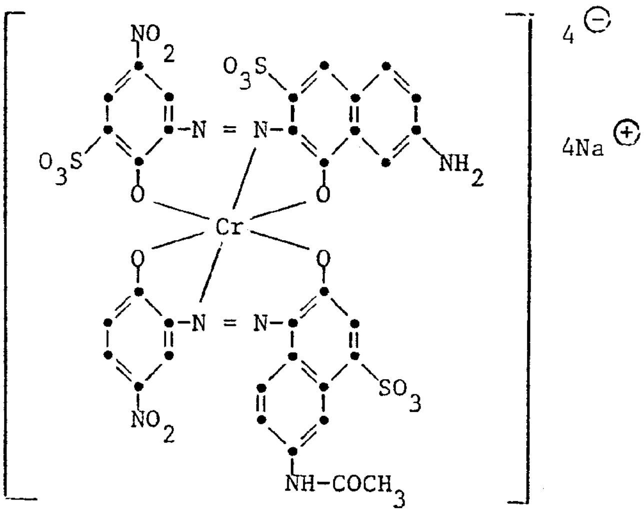 |
| 8 | 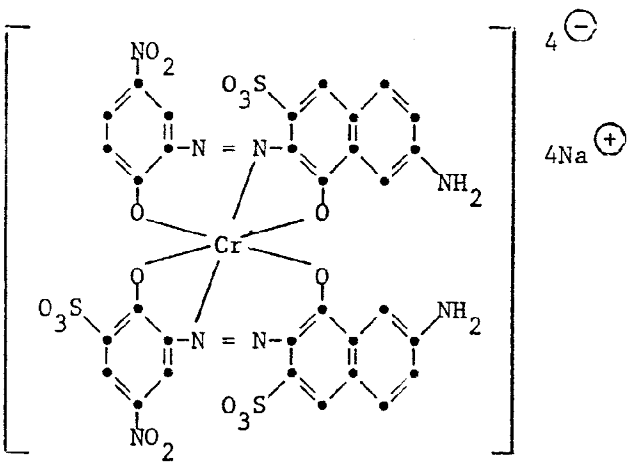 |

**Patentansprüche**

1. Verfahren zum Färben von Leder mit einer Mischung aus einem gelben, einem roten und einem blauen Farbstoff, wobei der gelbe und der rote Farbstoff der Formel

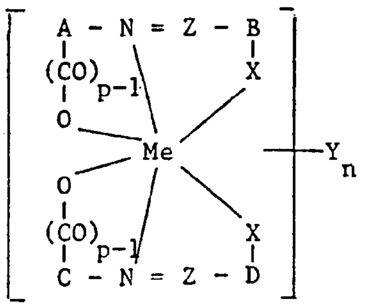

(I)

entsprechen, worin

Z unabhängig voneinander Stickstoff oder eine CH-Gruppe,

A und C unabhängig voneinander je einen Rest der Benzol- oder Naphthalinreihe, welcher in o-Stellung zur Azo- oder Azomethingruppe eine Hydroxy- oder Carboxygruppe enthält,

B und D unabhängig voneinander je den Rest einer Kupplungskomponente, wenn Z Stickstoff ist, wobei die Kupplungskomponente in o-bzw. α-Stellung zur Azogruppe die Gruppe X enthält, oder unabhängig voneinander den Rest eines o-Hydroxyaldehyds, wenn Z die CH-Gruppe darstellt,

X unabhängig voneinander je Sauerstoff oder eine Gruppe der Formel -NR-, worin R Wasserstoff oder eine $C_1$-$C_4$-Alkylgruppe darstellt,

Me Chrom oder Kobalt,

Y die $SO_3H$-, COOH- oder $PO_3H_2$-Gruppe,

p 1 oder 2 und

n eine ganze Zahl von 1 bis 6 bedeutet,

dadurch gekennzeichnet, dass man eine wässrige Färbeflotte verwendet, welche einen grauen Farbstoff enthält, der der Formel

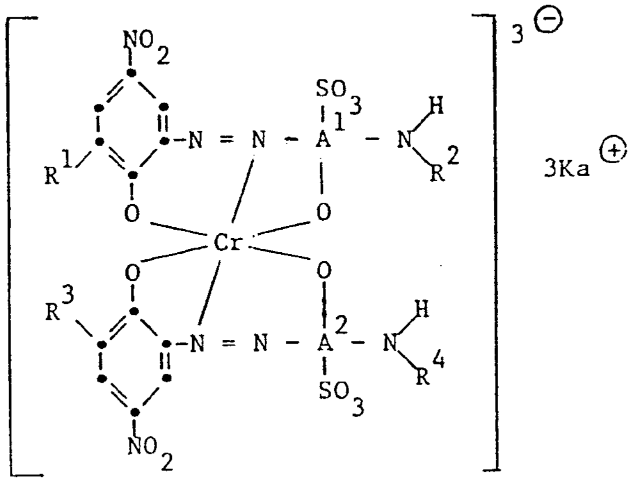

(II)

entspricht, worin

$R^1$ und $R^3$ unabhängig voneinander je Wasserstoff oder Sulfo,

$A^1$ und $A^2$ unabhängig voneinander je den Rest von 1-Hydroxynaphthalin oder 2-Hydroxynaphthalin,

$R^2$ und $R^4$ unabhängig voneinander je Wasserstoff oder eine Gruppe der Formel $-CO-(O)_m-E$, wobei E $C_1$-$C_5$-Alkyl und m 0 oder 1 ist, und

$Ka^{\oplus}$ ein Kation bedeutet.

2. Verfahren gemäss Anspruch 1, dadurch gekennzeichnet, dass man einen grauen Farbstoff der Formel II verwendet, worin sich die Reste $A^1$ und $A^2$ unabhänbig voneinander von 1-Hydroxynaphthalin-3-sulfonsäure

oder von 2-Hydroxynaphthalin-4-sulfonsäure ableiten, wobei sich die Gruppen $-NHR^2$ und $-NHR^4$ in 6- oder 7-Stellung befinden.

3. Verfahren gemäss einem der Ansprüche 1 oder 2, dadurch gekennzeichnet, dass man einen grauen Farbstoff der Formel II verwendet, worin $R^2$ und $R^4$ unabhängig voneinander Wasserstoff oder Acetyl bedeuten.

4. Verfahren gemäss einem der Ansprüche 1 bis 3, dadurch gekennzeichnet, dass man einen grauen Farbstoff der Formel II verwendet, worin sich die Reste $A^1$ und $A^2$ unabhängig voneinander von 1-Hydroxy-7-aminonaphthalin-3-sulfonsäure, 1-Hydroxy-6-aminonaphthalin-3-sulfonsäure, 2-Hydroxy-6-aminonaphthalin-4-sulfonsäure oder von den entsprechenden Acetylamino- verbindungen ableiten.

5. Verfahren gemäss Anspruch 4, dadurch gekennzeichnet, dass man als grauen Farbstoff den 1:2-Chromkomplex des Farbstoffs der Formel

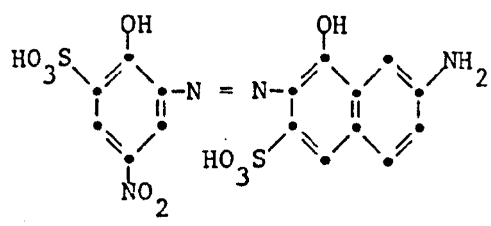

(III)

sowie vor allem den 1:2-Chromkomplex des Farbstoffs der Formel

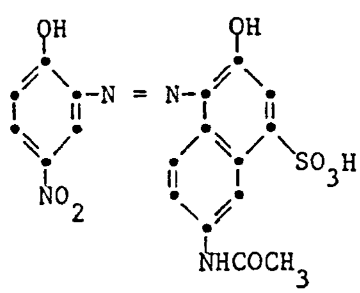

(IV) .

verwendet.

6. Verfahren gemäss einem der Ansprüche 1 bis 5, dadurch gekennzeichnet, dass man einen gelben und roten Farbstoff der Formel I verwendet, worin X Sauerstoff bedeutet.

7. Verfahren gemäss einem der Ansprüche 1 bis 6, dadurch gekennzeichnet, dass man einen gelben und roten Farbstoff der Formel I verwendet, worin Y die $SO_3H$-Gruppe bedeutet.

8. Verfahren gemäss einem der Ansprüche 1 bis 7, dadurch gekennzeichnet, dass man einen gelben und roten Farbstoff der Formel I verwendet, worin p gleich 1 ist.

9. Verfahren gemäss einem der Ansprüche 1 bis 8, dadurch gekennzeichnet, dass man einen gelben und roten Farbstoff der Formel I verwendet, worin n 1 bis 3, vorzugsweise 2 bedeutet.

10. Verfahren gemäss einem der Ansprüche 1 bis 9, dadurch gekennzeichnet, dass man einen gelben und roten Farbstoff der Formel I verwendet, worin A und C unabhängig voneinander jeweils den Rest eines 1-Hydroxy-2-aminobenzols darstellen, welcher gegebenenfalls ein- oder mehrmals durch gleiche oder verschiedene Substituenten aus der Reihe Nitro, Sulfo, Chlor, Methyl oder Methoxy substituiert ist.

11. Verfahren gemäss Anspruch 10, dadurch gekennzeichnet, dass man einen gelben und roten Farbstoff der Formel I verwendet, worin A und C jeweils den Rest eines 1-Hydroxy-2-aminobenzols bedeuten, der in 4- oder 5-Stellung eine Nitrogruppe trägt, oder den Rest eines 1-Hydroxy-2-aminobenzols, der in 4-Stellung eine Nitrogruppe und in 6-Stellung eine Sulfogruppe trägt oder den Rest eines 1-Hydroxy-2-aminobenzols, der in 4-Stellung eine Sulfogruppe und in 6-Stellung eine Nitrogruppe trägt.

12. Verfahren gemäss einem der Ansprüche 1 bis 11, dadurch gekennzeichnet, dass man einen gelben und roten Farbstoff der Formel I verwendet, worin B und D unabhängig voneinander jeweils den Rest einer der folgenden Kupplungskomponenten bedeutet: gegebenenfalls durch niedermolekulares Alkyl oder Alkoxy, Amino oder Acylamino substituiertes in o-Stellung kuppelndes Phenol, Resorcin, m-Phenylendiamin, gegebenenfalls in 4-Stellung substituiert durch Sulfo, Chlor, Methyl oder Methoxy, Naphthole, die gegebenenfalls mit $C_1$-$C_4$-Alkyl oder Alkoxy, Chlor, Amino, Acylamino oder Sulfo substituiert sind, 5-Pyrazolone oder 5-Aminopyrazole, die in 1-Stellung einen gegebenenfalls mit Chlor, Nitro, $C_1$-$C_4$-Alkyl- oder Alkoxygruppen oder Sulfogruppen substituierten Phenyl- oder Naphthylrest besitzen und in 3-Stellung eine $C_1$-$C_4$-Alkylguppe, insbesondere eine Methylgruppe, aufweisen, Acetessigsäureamide, Acetessigsäureanilide und Benzoylessigsäureanilide, die im Anilidkern gegebenenfalls mit Chlor, $C_1$-$C_4$-Alkyl- oder Alkoxy- doer Sulfogruppen substituiert sein können, oder 6-Hydroxy-3-cyano- oder 6-Hydroxy-3-carbonamido-4-alkyl-2-pyridone, die in 1-Stellung durch gegebenenfalls substituiertes $C_1$-$C_4$-Alkyl, z.B. Methyl, Isopropyl, β-Hydroxyäthyl, β-Aminoäthyl oder γ-Isopropoxypropyl oder durch Phenyl substituiert sind, und in 4-Stellung eine $C_1$-$C_4$-Alkylgruppe, insbesondere Methyl, tragen können.

13. Verfahren gemäss Anspruch 12, dadurch gekennzeichnet, dass man einen gelben und roten Farbstoff der Formel I verwendet, worin B und D unabhängig voneinander jeweils den Rest einer der folgenden Kupplungskomponenten bedeutet: 1- oder 2-Naphthol, gegebenenfalls substituiert mit einer Sulfogruppe, m-Phenylendiamin, Resorcin, p-Alkyl($C_1$-$C_6$)-phenol, 1-Phenyl-3-methyl-5-pyrazolon oder Acetessigsäureanilid, wobei die Phenylgruppe in den beiden letztgenannten Verbindungen durch $C_1$-$C_4$-Alkyl, $C_1$-$C_4$-Alkoxy, Chlor oder Sulfo substituiert sein kann.

14. Verfahren gemäss einem der Ansprüche 1 bis 13, dadurch gekennzeichnet, dass man einen gelben und roten Farbstoff der Formel I verwendet, worin die beiden Farbstoffe jeweils symmetrische 1:2-Komplexe mit insgesamt 2 Sulfogruppen darstellen.

15. Verfahren gemäss einem der Ansprüche 1 bis 5, dadurch gekennzeichnet, dass man einen gelben und roten Farbstoff verwendet, welche der Formel

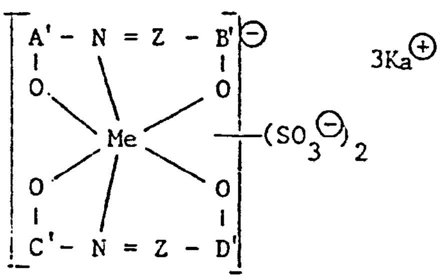

(V)

entsprechen, worin

Z unabhängig voneinander Stickstoff oder eine CH-Gruppe,

A′ und C′ jeweils den Rest eines 1-Hydroxy-2-aminobenzols bedeuten, der in 4- oder 5-Stellung eine Nitrogruppe trägt, oder den Rest eines 1-Hydroxy-2-aminobenzols, der in 4-Stellung eine Nitrogruppe und in 6-Stellung eine Sulfogruppe trägt oder den Rest eines 1-Hydroxy-2-aminobenzols, der in 6-Stellung eine Nitrogruppe trägt und in 4-Stellung eine Sulfogruppe,

B′ und D′ unabhängig voneinander jeweils den Rest einer der folgenden Kupplungskomponenten bedeutet, falls Z Stickstoff ist: 1-oder 2-Naphthol gegebenenfalls substituiert mit einer Sulfogruppe, m-Phenylendiamin, Resorcin, p-Alkyl($C_1$-$C_6$)-phenol, 1-Phenyl-3-methyl-5-pyrazolon oder Acetessigsäureanilid, wobei die Phenylgruppe in den beiden letztengenannten Verbindungen durch $C_1$-$C_4$-Alkyl, $C_1$-$C_4$-Alkoxy, Chlor oder Sulfo substituiert sein kann, oder, falls Z die CH-Gruppe ist, den Rest eines o-Hydroxybenzaldehyds oder o-Hydroxynaphthaldehyds, die durch Phenylazo oder Sulfophenylazo substituiert sein können,

Me Kobalt oder Chrom und

$Ka^{\oplus}$ ein Kation bedeutet.

16. Verfahren gemäss einem der Ansprüche 1 bis 5, dadurch gekennzeichnet, dass man eine Farbstoffmischung verwendet, enthaltend

a) einen grauen 1:2-Chromkomplex der im Anspruch 1 angegebenen Formel II,

b) einen roten oder rotbraunen 1:2-Chrom- oder 1:2-Kobaltkomplex des Farbstoffs der Formel

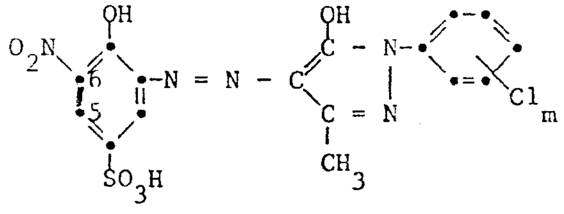

(VI) ,

worin m eine ganze Zahl von 0 bis 2 bedeutet,

sowie

c) einen gelben 1:2-Kobaltkomplex des Farbstoffes der Formel

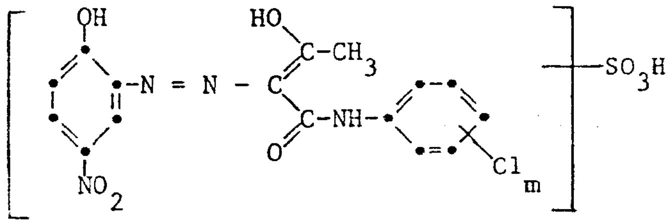

(VII) ,

worin m die oben angegebene Bedeutung hat, oder einen gelbbraunen 1:2-Kobalt- oder 1:2-Chromkomplex des Farbstoffes der Formel

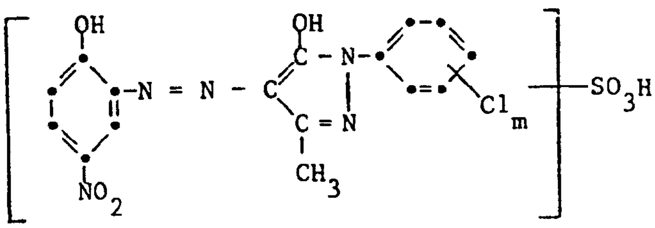

(VIII),

worin m die oben angegebene Bedeutung hat.

17. Verfahren gemäss einem der Ansprüche 1 bis 16, dadurch gekennzeichnet, dass man eine Färbeflotte verwendet, welche zusätzlich ein farbvertiefendes Hilfsmittel enthält.

18. Verfahren gemäss Anspruch 17, dadurch gekennzeichnet, dass man eine Färbeflotte verwendet, welche als farbvertiefendes Hilfsmittel ein äthoxyliertes Alkylamin enthält.

## Claims

1. A process for dyeing leather with a mixture comprising a yellow, a red and a blue dye, said yellow dye and said red dye each being of the formula

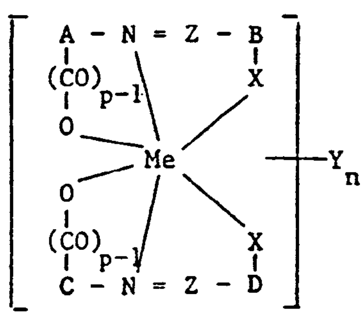

(I)

in which

the substituents Z are each independently of the other nitrogen or a CH group,

A and C are each independently of the other a radical of the benzene or naphthalene series, which radical carries a hydroxyl or carboxyl group in the o-position to the azo or azomethine group,

B and D are each independently of the other the radical of a coupling component if Z is nitrogen, which coupling component carries the group X in the o- or α-position to the azo group, or are each independently of the other the radical of an o-hydroxyaldehyde if Z is the CH group,

the substituents X are each independently of the other oxygen or a group of the formula -NR- in which R is hydrogen or a $C_1$-$C_4$alkyl group,

Me is chromium or cobalt,

Y is the $SO_3H$, COOH or $PO_3H_2$ group,
p is 1 or 2 and
n is an integer from 1 to 6,
which process comprises the use of an aqueous dye liquor which contains a grey dye of the formula

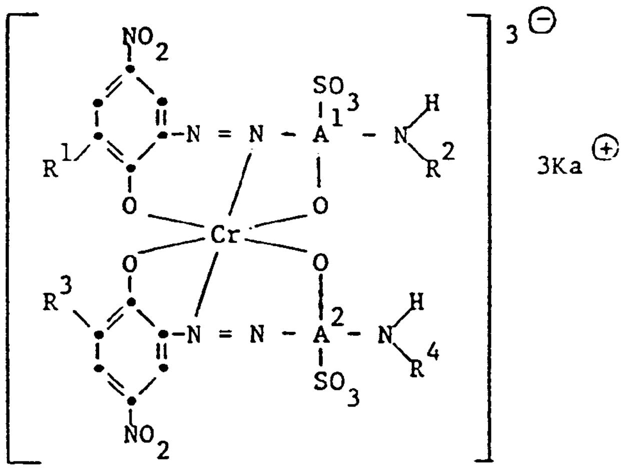

(II)

in which

$R^1$ and $R^3$ are each independently of the other hydrogen or sulfo,

$A^1$ and $A^2$ are each independently of the other the radical of 1-hydroxynaphthalene or 2-hydroxynaphthalene,

$R^2$ and $R^4$ are each independently of the other hydrogen or a group of the formula $-CO-(O)_m-E$ in which E is $C_1$-$C_5$alkyl and m is 0 or 1, and

$Ka^{\oplus}$ is a cation.

2. A process according to claim 1, which comprises the use of a grey dye of formula II in which the radicals $A^1$ and $A^2$, each independently of the other, are derived from 1-hydroxynaphthalene-3-sulfonic acid or from 2-hydroxynaphthalene-4-sulfonic acid, the $-NHR^2$ and $-NHR^4$ groups being in the 6- or 7-position.

3. A process according to either of claims 1 or 2, which comprises the use of a grey dye of formula II in which $R^2$ and $R^4$ are each independently of the other hydrogen or acetyl.

4. A process according to any one of claims 1 to 3, which comprises the use of a grey dye of formula II in which the radicals $A^1$ and $A^2$, each independently of the other, are derived from 1-hydroxy-7-amino-naphthalene-3-sulfonic acid, 1-hydroxy-6-aminonaphthalene-3-sulfonic acid, 2-hydroxy-6-aminonaphthalene-4-sulfonic acid or from the corresponding acetylamino compounds.

5. A process according to claim 4, wherein the grey dye used is the 1:2-chromium complex of the dye of the formula

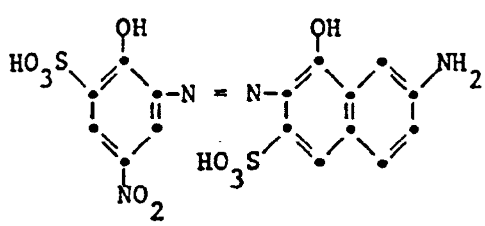

(III)

or, in particular, the 1:2-chromium complex of the dye of the formula

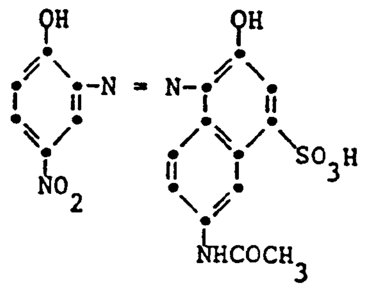

(IV).

6. A process according to any one of claims 1 to 5, which comprises the use of a yellow dye and a red dye each of formula I in which X is oxygen.

7. A process according to any one of claims 1 to 6, which comprises the use of a yellow dye and a red dye each of formula I in which Y is the $SO_3H$ group.

8. A process according to any one of claims 1 to 7, which comprises the use of a yellow dye and a red dye each of formula I in which p is 1.

9. A process according to any one of claims 1 to 8, which comprises the use of a yellow dye and a red dye each of formula I in which n is 1 to 3, preferably 2.

10. A process according to any one of claims 1 to 9, which comprises the use of a yellow dye and a red dye each of formula I in which A and C are each independently of the other the radical of a 1-hydroxy-2-amino-benzene which is unsubstituted or substituted by one or more identical or different substituents selected from the series consisting of nitro, sulfo, chlorine, methyl or methoxy.

11. A process according to claim 10, which comprises the use of a yellow dye and a red dye each of formula I in which A and C are each the radical of a 1-hydroxy-2-aminobenzene which carries a nitro group in the 4- or 5-position, or are the radical of a 1-hydroxy-2-aminobenzene which carries a nitro group in the 4-position and a sulfo group in the 6-position, or are the radical of a 1-hydroxy-2-aminobenzene which carries a sulfo group in the 4-position and a nitro group in the 6-position.

12. A process according to any one of claims 1 to 11, which comprises the use of a yellow dye and a red dye each of formula I in which B and D are each independently of the other the radical of one of the following coupling components:
phenol which couples in the o-position and which is unsubstituted or substituted by low molecular weight alkyl or alkoxy, amino or acylamino; resorcinol; m-phenylenediamine, unsubstituted or substituted in the 4-position by sulfo, chloro, methyl or methoxy; naphthols which are unsubstituted or substituted by $C_1$-$C_4$alkyl or $C_1$-$C_4$alkoxy, chlorine, amino, acylamino or sulfo; 5-pyrazolones or 5-aminopyrazoles, which carry in the 1-position a phenyl or naphthyl radical, each unsubstituted or substituted by chlorine, nitro, $C_1$-$C_4$alkyl or $C_1$-$C_4$alkoxy groups or sulfo groups, and in the 3-position carry a $C_1$-$C_4$alkyl group, especially a methyl group; acetoacetamides, acetoacetanilides and benzoylacetanilides which may be substituted in the anilide nucleus by chlorine, $C_1$-$C_4$alkyl or $C_1$-$C_4$alkoxy groups or sulfo groups; or 6-hydroxy-3-cyano- or 6-hydroxy-3-carboxamido-4-alkyl-2-pyridones which are substituted in the 1-position by unsubstituted or substituted $C_1$-$C_4$alkyl, for example methyl, isopropyl, β-hydroxyethyl, β-aminoethyl or γ-isopropoxypropyl, or by phenyl, and in the 4-position can carry a $C_1$-$C_4$alkyl group, especially methyl.

13. A process according to claim 12, which comprises the use of a yellow dye and a red dye each of formula I in which B and D are each independently of the other the radical of one of the following coupling components: 1- or 2-naphthol which is unsubstituted or substituted by a sulfo group, or m-phenylenediamine, resorcinol, p-$C_1$-$C_6$alkylphenol, 1-phenyl-3-methyl-5-pyrazolone or acetoacetanilide, where the phenyl group in the two last-mentioned compounds may be substituted by $C_1$-$C_4$alkyl, $C_1$-$C_4$alkoxy, chlorine or sulfo.

14. A process according to any one of claims 1 to 13, which comprises the use of a yellow dye and a red dye each of formula I in which each of the two dyes is a symmetric 1:2-complex containing a total of 2 sulfo groups.

15. A process according to any one of claims 1 to 5, which comprises the use of a yellow dye and a red dye each of the formula

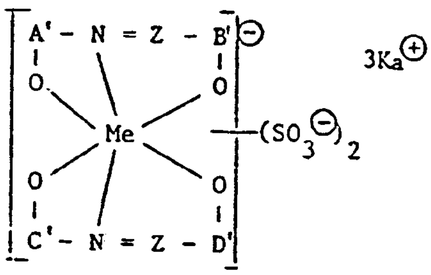

(V)

in which

the substituents Z are each independently of the other nitrogen or a CH group,

A′ and C′ are each the radical of a 1-hydroxy-2-aminobenzene which carries a nitro group in the 4- or 5-position, or are the radical of a 1-hydroxy-2-aminobenzene which carries a nitro group in the 4-position and a sulfo group in the 6-position, or are the radical of a 1-hydroxy-2-aminobenzene which carries a nitro group in the 6-position and a sulfo group in the 4-position,

B′ and D′ are each independently of the other the radical of one of the following coupling components if Z is nitrogen: 1- or 2-naphthol which is unsubstituted or substituted by a sulfo group, or m-phenylenediamine, resorcinol, p-$C_1$-$C_6$alkylphenol, 1-phenyl-3-methyl-5-pyrazolone or acetocetanilide, where the phenyl group in the two last-mentioned compounds may be substituted by $C_1$-$C_4$alkyl, $C_1$-$C_4$alkoxy, chlorine or sulfo, or, if Z is the CH group, are each independently of the other the radical of an o-hydroxybenzaldehyde or o-hydroxynaphthaldehyde, each of which may be substituted by phenylazo or sulfophenylazo,

Me is cobalt or chromium and

$Ka^{\oplus}$ is a cation.

16. A process according to any one of claims 1 to 5, which comprises the use of dye mixture containing

a) a grey 1:2 chromium complex of the formula II as indicated in claim 1,

b) a red or reddish brown 1:2-chromium or 1:2-cobalt complex of the dye of the formula

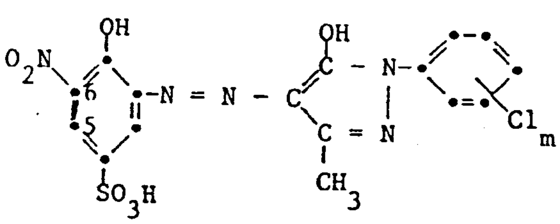

(VI)

in which m is an integer from 0 to 2, and

c) a yellow 1:2-cobalt complex of the dye of the formula

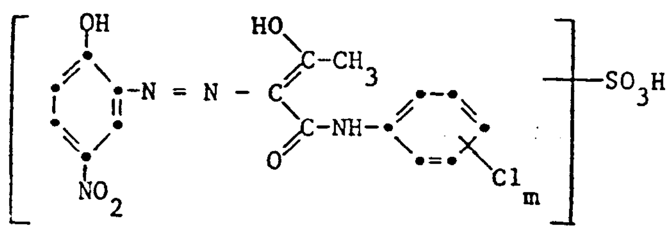

(VII)

in which m is as defined above, or a yellowish brown 1:2-cobalt or 1:2-chromium complex of the dye of the formula

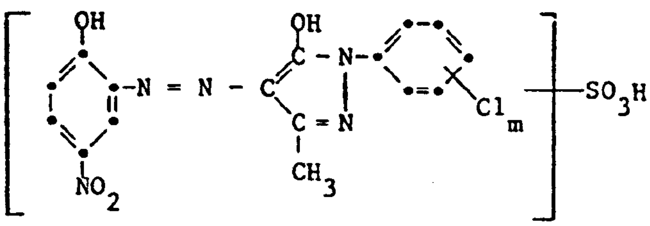

(VIII)

in which m is as defined above.

17. A process according to any one of claims 1 to 16, which comprises the use of a dye liquor which additionally contains a colour-intensifying assistant.

18. A process according to claim 17, which comprises the use of a dye liquor which contains an ethoxylated alkylamine as the colour-intensifying assistant.

## Revendications

1. Procédé de teinture de cuir avec un mélange d'un colorant jaune, d'un colorant rouge et d'un colorant bleu, le colorant jaune et le colorant rouge ayant la formule

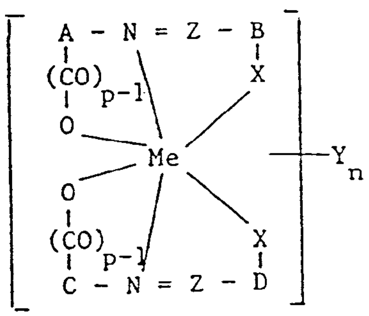

(I)

où

Z désigne indépendamment l'un de l'autre, de l'azote ou un groupe CH,

A et C, indépendamment l'un de l'autre, désignent un reste de la série benzénique ou naphtalénique, contenant en position o par rapport au groupe azoïque ou azométhinique un groupe hydroxy ou carboxy,

B et D, indépendamment l'un de l'autre, désignent le reste d'un copulant, lorsque Z est un azote, le copulant se trouvant en position o ou α par rapport au groupe azoïque contenant le groupe X, ou bien, indépendamment l'un de l'autre, ils désignent le reste d'un o-hydroxyaldéhyde, lorsque Z désigne le groupe CH,

X indépendamment l'un de l'autre, désigne l'oxygène ou un groupe de formule -NR-, où R désigne l'hydrogène ou un groupe alkyle en $C_1$-$C_4$,

Me désigne le chrome ou le cobalt,

Y désigne le groupe $SO_3H$, COOH ou $PO_3H_2$,

p est 1 ou 2, et

n désigne un nombre entier de 1 à 6,

caractérisé en ce qu'on utilise un bain de teinture aqueux contenant un colorant gris de formule

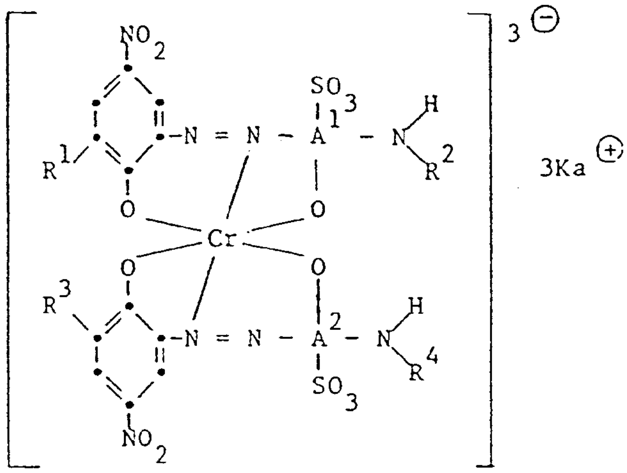

(II)

où

$R^1$ et $R^3$, indépendamment l'un de l'autre, désignent un atome d'hydrogène ou un groupe sulfo,

$A^1$ et $A^2$ désignent, indépendamment l'un de l'autre, le reste de 1-hydroxynaphtalène ou 2-hydroxynaphtalène,

$R^2$ et $R^4$, indépendamment l'un de l'autre, désignent l'hydrogène ou un groupe de formule $-CO-(O)_m-E$, où E est un alkyle en $C_1$-$C_5$ et m désigne 0 ou 1, et $Ka^{\oplus}$ désigne un cation.

2. Procédé selon la revendication 1, caractérisé en ce qu'on utilise un colorant gris de formule II où les restes $A^1$ et $A^2$, indépendamment l'un de l'autre, dérivent de l'acide 1-hydroxynaphtalène-3-sulfonique ou de l'acide 2-hydroxynaphtalène-4-sulfonique, les groupes $-NHR^2$ et $-NHR^4$ se trouvant en position 6 ou 7.

3. Procédé selon l'une des revendications 1 ou 2, caractérisé en ce qu'on utilise un colorant gris de formule II où $R^2$ et $R^4$, indépendamment l'un de l'autre, désignent hydrogène ou acétyle.

4. Procédé selon l'une des revendications 1 à 3, caractérisé en ce qu'on utilise un colorant gris de formule II où les restes $A^1$ et $A^2$, indépendamment l'un de l'autre, dérivent de l'acide 1-hydroxy-7-amino-naphtalène-3-sulfonique, de l'acide 1-hydroxy-6-amino-naphtalène-3-sulfonique, de l'acide 2-hydroxy-6-amino-naphtalène-4-sulfonique ou des composés acétylamino correspondants.

5. Procédé selon la revendication 4, caractérisé en ce qu'on utilise comme colorant gris le complexe au chrome 1:2 du colorant de formule

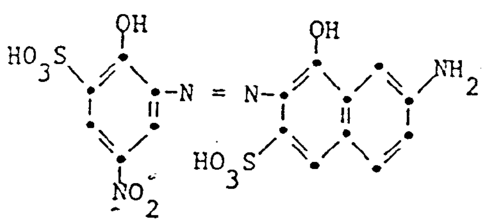

(III)

et en particulier le complexe au chrome 1:2 du colorant de formule

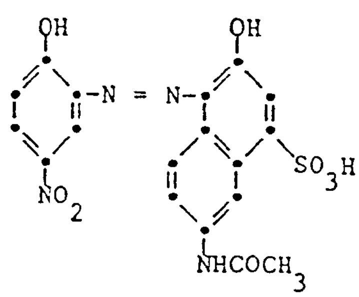

(IV)

6. Procédé selon l'une des revendications 1 à 5, caractérisé en ce qu'on utilise un colorant jaune et rouge

de formule I où X désigne oxygène.

7. Procédé selon l'une des revendications 1 à 6, caractérisé en ce qu'on utilise un colorant jaune et rouge de formule I où Y désigne le groupe $SO_3H$.

8. Procédé selon l'une des revendications 1 à 7, caractérisé en ce qu'on utilise un colorant jaune et rouge de formule I où p désigne 1.

9. Procédé selon l'une des revendications 1 à 8, caractérisé en ce qu'on utilise un colorant jaune et rouge de formule I où n désigne 1 à 3, et de préférence 2.

10. Procédé selon l'une des revendications 1 à 9, caractérisé en ce qu'on utilise un colorant jaune et rouge de formule I où A et C, indépendamment l'un de l'autre, désignent le reste d'un 1-hydroxy-2-amino-benzène, pouvant être substitué par un ou plusieurs substituants identiques ou différents choisis parmi nitro, sulfo, chloro, méthyle ou méthoxy.

11. Procédé selon la revendication 10, caractérisé en ce qu'on utilise un colorant jaune et rouge de formule I où A et C désignent le reste d'un 1-hydroxy-2-aminobenzène portant en position 4 ou 5 un groupe nitro, ou bien le reste d'un 1-hydroxy-2-aminobenzène portant en position 4 un groupe nitro et en position 6 un groupe sulfo, ou bien le reste d'un 1-hydroxy-2-aminobenzène portant en position 4 un groupe sulfo et en position 6 un groupe nitro.

12. Procédé selon l'une des revendications 1 à 11, caractérisé en ce qu'on utilise un colorant jaune et rouge de formule I où B et D, indépendamment l'un de l'autre, désignent le reste d'un des copulants ci-après : phénol copulant en position o et éventuellement substitué par des alkyles ou alcoxy à bas poids moléculaire ou par amino ou acylamino ; résorcine, m-phénylènediamines éventuellement substituées en position 4 par sulfo, chloro, méthyle ou méthoxy ; naphtols éventuellement substitués par alkyle ou alcoxy en $C_1$-$C_4$, chlore, amino, acylamino ou sulfo, 5-pyrazolones ou 5-aminopyrazoles comportant en position 1 un reste phényle ou naphtyle, substitués éventuellement par chlore, nitro, alkyle ou alcoxy en $C_1$-$C_4$ ou par sulfo et en position 3 présentent un groupe alkyle en $C_1$-$C_4$ et en particulier un groupe méthyle ; amides de l'acide acétylacétique, anilides de l'acide acétylacétique et anilides de l'acide benzoyl-acétique, pouvant être substitués dans le noyau anilide par chlore, alkyle ou alcoxy en $C_1$-$C_4$ ou par des groupes sulfo, ou bien une 6-hydroxy-3-cyano- ou une 6-hydroxy-3-carbonamido-4-alkyl-2-pyridone, pouvant porter en position 1 un alkyle en $C_1$-$C_4$ éventuellement substitué, par exemple méthyle, iso-propyle, β-hydroxyéthyle, β-aminoéthyle ou γ-isopropoxypropyle ou bien qui sont substitués par phényle et en position 4 peuvent porter un groupe alkyle en $C_1$-$C_4$, en particulier méthyle.

13. Procédé selon la revendication 12, caractérisé en ce qu'on utilise un colorant jaune ou rouge de formule I où B et D, indépendamment l'un de l'autre, désignent le reste d'un des copulants ci-après : 1- ou 2-naphtol, éventuellement substitué par un groupe sulfo, m-phénylènediamine, résorcine, p-alkyl($C_1$-$C_6$)-phénol, 1-phényl-3-méthyl-5-pyrazolone ou anilide de l'acide acétylacétique, où le groupe phényle des deux derniers composés peut être substitué par un alkyle en $C_1$-$C_4$, alcoxy en $C_1$-$C_4$, chlore ou sulfo.

14. Procédé selon l'une des revendications 1 à 13, caractérisé en ce qu'on utilise un colorant jaune ou rouge de formule I où les deux colorants présentent chacun des complexes 1:2 symétriques avec au total 2 groupes sulfo.

15. Procédé selon l'une des revendications 1 à 5, caractérisé en ce qu'on utilise un colorant jaune et rouge de formule

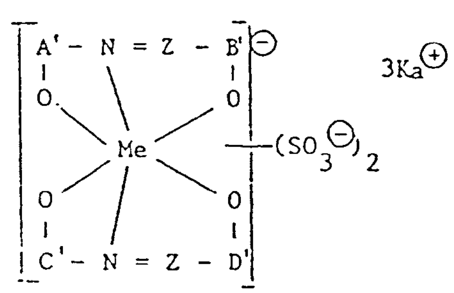

(V)

où

Z, indépendamment l'un de l'autre, désigne azote ou un groupe CH,

A′ et C′ désignent le reste d'un 1-hydroxy-2-amino-benzène portant en position 4 ou 5 un groupe nitro, ou bien le reste d'un 1-hydroxy-2-aminobenzène portant en position 4 un groupe nitro et en position 6 un groupe sulfo, ou bien le reste d'un 1-hydroxy-2-aminobenzène portant en position 6 un groupe nitro et en position 4 un groupe sulfo,

B′ et D′, indépendamment l'un de l'autre, désignent le reste de l'un des copulants suivants, dans le cas

où Z désigne azote : 1- ou 2-naphtol éventuellement substitué par un groupe sulfo, m-phénylènediamine, résorcine, p-alkyl($C_1$-$C_6$)-phénol, 1-phényl-3-méthyl-5-pyrazolone ou anilide de l'acide acétylacétique, le groupe phényle des deux derniers composés pouvant être substitué par un alkyle en $C_1$-$C_4$, alcoxy en $C_1$-$C_4$, chlore ou sulfo, ou bien lorsque Z désigne le groupe CH, le reste d'un o-hydroxybenzaldéhyde ou d'un o-hydroxynaphtaldéhyde, pouvant être substitués par phénylazo ou sulfophénylazo,

Me désigne cobalt ou chrome, et

$Ka^{\oplus}$ désigne un cation.

16. Procédé selon l'une des revendications 1 à 5, caractérisé en ce qu'on utilise un mélange de colorants renfermant

a) un complexe de chrome 1:2 gris ayant la formule II indiquée dans la revendication 1,

b) un complexe de chrome 1:2 ou un complexe de cobalt 1:2, rouge ou brun-rouge, du colorant de formule

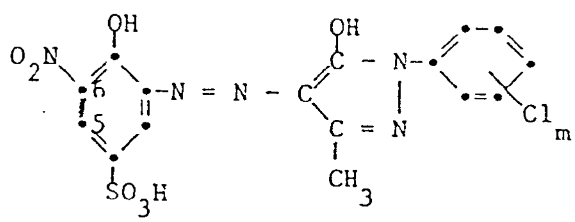

(VI)

où m désigne un nombre entier de 0 à 2, ainsi que

c) un complexe de cobalt 1:2 jaune du colorant de formule

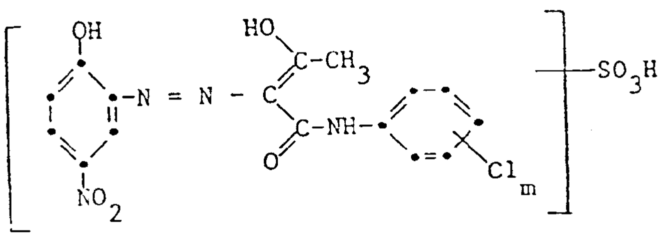

(VII)

où m a la signification ci-dessus indiquée, ou bien un complexe de cobalt 1:2 ou un complexe de chrome 1:2 brun-jaune du colorant de formule

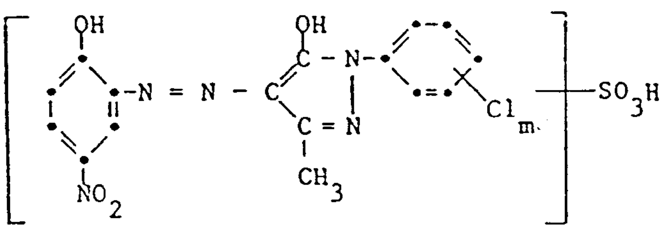

(VIII)

où m a la signification ci-dessus indiquée.

17. Procédé selon l'une des revendications 1 à 16, caractérisé en ce qu'on utilise un bain de teinture contenant également un adjuvant destiné à augmenter la profondeur de la couleur.

18. Procédé selon la revendication 17, caractérisé en ce qu'on utilise un bain de teinture renfermant comme adjuvant permettant d'approfondir la profondeur de la couleur une alkylamine éthoxylée.